# EUROPEAN PATENT APPLICATION

(11) **EP 1 931 016 A2**
(43) Date of publication of application: **11.06.2008**
(21) Application number: 07023153.5
(22) Date of filing: 29.11.2007
(51) Int. Cl.: H02K 16/02, H02K 49/10

(54) **Magnetic drive electrical rotary motor**

(30) Priority: 05.12.2006 IT MI20062336
(71) Applicant: METELLI S.p.A., 25033 Cologne BS (IT)
(72) Inventor: Armellin, Luca, 25082 Botticino (Brescia) (IT); Don, Alessandro, 25089 Villanuova sul Clisi (Brescia) (IT); Gatelli, Fabio, 25021 Bagnolo Mella (Brescia) (IT); Tanghetti, Giulio, 25063 Gardone Val Trompia (Brescia) (IT)
(74) Representative: Lecce, Giovanni

(57) **Abstract**

A magnetic drive electrical rotary motor (10) of the brushless type, especially suitable for being used in the automotive field and suitable for placing in rotation the impeller of a pump for the circulation of cooling fluids in an internal combustion motor or in a fuel cell, comprising a stator (12), a first rotor or external rotor (16) arranged coaxially and internally to said stator and a second rotor or internal rotor (22) arranged coaxially and internally to the first rotor (16), said motor comprising magnetic means, arranged on the surface of said first and second rotor (16, 22), suitable for ensuring a fail safe operation of the pump or of the device connected to the motor itself.

## Description

This invention relates to a magnetic drive electrical rotary motor.

More in particular, this invention relates to an electrical rotary motor, typically of the brushless type and composed of the combination of two concentric rotors and a common stator. Said motor is especially suitable for being used in the automotive field as a replacement element of the traditional electrical motors and suitable for placing in rotation for example the impeller of a pump for the circulation of cooling fluids in an internal combustion motor or in a fuel cell.

As known, with particular but non exclusive reference to internal combustion motors, the need of circulating predetermined fluids for specific purposes, such as for example the cooling or lubrication of particular members or parts of the motor, exists.

A pump is traditionally used to achieve such purpose, whose impeller is placed in rotation by a driving pulley or another mover, which is always at a rotation speed with a speed related to that of the vehicle motor.

As an alternative, the pump impeller can be placed in rotation by an electrical motor, with the advantage of regulating the impeller revolution speed based on the cooling requirements of the motor.

However, these solutions show some important drawbacks, related to the fact that the impeller is immersed in water or in other fluid and gland elements, strongly subject to wear and primary cause of the frequent pump replacement, are used for obtaining the seal and prevent the leak of fluid towards the elements responsible for the pulley rotation.

A further drawback is the fact that the traditional systems require long maintenance times besides difficulties related to the operations for assembling the components, with consequent increase of the related costs.

A further drawback is represented by the fact that the electrical motor in case used for placing the pump impeller in rotation is not fail safe, that is, does not ensure a safe operation of the pump impeller also in the case of failure or fault of the motor or of the power supply mains.

The object of this invention is to obviate the drawbacks discussed hereinabove.

More in particular, the object of this invention is to provide a **compact** magnetic drive electrical rotary motor and with limited overall dimensions.

A further object of this invention is to provide an electrical rotary motor which can be coupled with a pump of a cooling circuit allowing the elimination of sealing elements with a high risk of wear and therefore such as to impair the useful life of the pump itself.

A further object of this invention is to provide an electrical rotary motor which can be easily made fail-safe, that is, a motor that in the event of failure or electrical fault, allows the pump to continue performing its function even if, in case, at a reduced speed.

A further object of this invention is to provide the users with a magnetic drive rotary motor suitable for ensuring a high level of resistance and reliability over time, and also such as to be easily and inexpensively constructed.

These and other objects are achieved by the magnetic drive electrical rotary motor of the invention which comprises a stator, a first rotor or external rotor arranged coaxially and internally to said stator and a second rotor or internal rotor arranged coaxially and internally to the first rotor, said motor further comprising magnetic means arranged on the surface of said first and second rotor and suitable for ensuring a fail safe operation of the pump or of the device connected to the motor itself.

The construction and functional features of the magnetic drive rotary motor of this invention can be better understood from the following detailed description, wherein reference is made to the annexed drawings showing a preferred and non-limiting embodiment thereof, and wherein:
figure 1 shows a front schematic view of magnetic drive rotary motor of this invention;
figure 2 shows a schematic longitudinal section view of the electrical rotary motor of this invention.

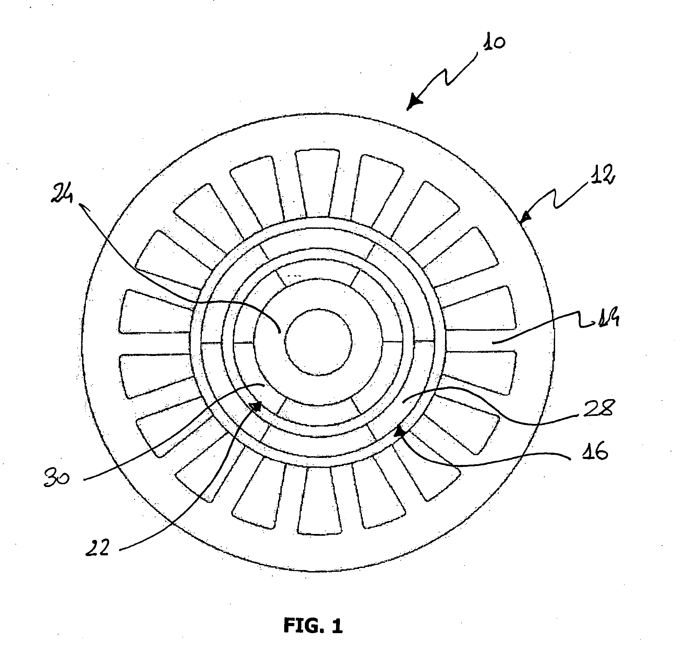

With reference to the above figures, the magnetic drive rotary motor of this invention, indicated with 10 in the assembly of figure 1, comprises a conventional stator 12 of basically circular shape on whose internal side surface a plurality of expansions or poles 14 are formed, whereabout the electrical windings, not shown in the figure, are arranged, suitable for generating an electromagnetic field for the functions that will be discussed hereinafter.

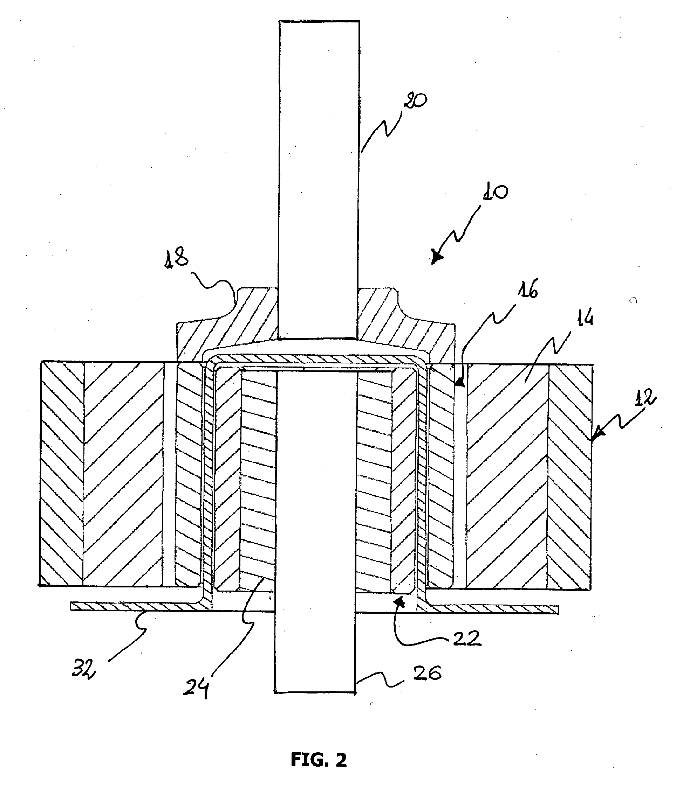

A first rotor 16 or external rotor is arranged coaxially to stator 12 and internally therein, connected to a mover of the pump such as for example a pulley; the connection between said first rotor and the pump pulley is obtained by means of a joint 18 of the conventional type, as schematised in the section of figure 2.

The joint 18 is fixed in a known manner, for example by interference, to a first shaft 20 whereon the pulley, not shown in the figure, of the pump for cooling circuits, is keyed.

A second rotor 22 or internal rotor is arranged coaxially to the first rotor 16 and internally therein, which is fitted coaxially to an internal core 24 of ferromagnetic material; said internal core is keyed on a second shaft 26 connected to the impeller, not shown in the figure, of the pump for cooling circuits. Such internal core 24 has the function of improving the magnetic coupling between the two rotors and allowing the transmission of higher torques in the event of failure in fail-safe mode operation.

Both the first rotor 16 and the second rotor 22 are composed of one or more permanent magnets, respectively external 28 and internal 30, radially polarised in sectors and with alternating polarities; said magnets are made, for example, of NdFeB (Neodimium-Iron-Boron), AlNiCo (Aluminium-Nickel-Cobalt), SmCo (Samarium-Cobalt) or other suitable permanent magnetic material.

The same permanent magnets, moreover, can be made as a single body or as an assembly of two or more elements.

A partition 32 made of non-magnetic, non-conductor or in any case low electrical conductivity material, is arranged between the first rotor 16 and the second rotor 22; said partition 32 is stabilised relative to the stator 12 in a known manner. The same partition has the function of preventing fluid leaks between the second rotor 22 and the first rotor 16 in the case one of the rotors is immersed in the cooling fluid.

In an alternative embodiment, wherein both the first and the second rotor are immersed in the cooling fluid, the electrical motor of the invention envisages a further partition suitable for separating the first rotor 16 from the stator 12.

The electrical motor of this invention, in alternative embodiments, can in case envisage an electromagnetic joint or another known type (not shown in the figure), which has the function of connecting/disconnecting the pulley keyed on the shaft 20 suitable for placing in rotation the first rotor 16 which as a consequence of the variation of the linked magnetic field and of the phase displacement between the first and the second rotor 22 places in rotation the second rotor itself and thus the impeller connected thereto.

The operation of the electrical rotary motor of the invention described in detail hereinabove as regards its structural components, is described hereinafter.

The electrical windings of the stator 12, when crossed by electrical current, generate a rotating magnetic field that produces electro-motive forces induced in the first rotor 16; such first rotor, by the effect of said electro-motive forces, sets in rotation in the same direction as the electromagnetic field created by the stator 12 with a rotation frequency that is a function of the power supply frequency of the stator itself.

In this way, a reciprocal phase displacement occurs between the first rotor 16 and the second rotor 22, which tends to split the torque generated by the stator 12 on the rotor with a higher delay, that is, the second rotor 22.

In the idle motor condition, the first rotor 16 and the second rotor 22 are aligned, with null reciprocal phase displacement; when the stator 12 is powered by electrical current, an electromagnetic field responsible for a torque on the first rotor 16 is generated. As already mentioned hereinbefore, by the effect of such torque the first rotor 16 sets in rotation, thus increasing the angular phase displacement relative to the second rotor 22.

As the phase displacement between the first and the second rotor increases, the torque difference between the same decreases until it becomes null and negative; as a consequence, the second rotor 22 is subject to a greater torque than that of the first rotor 16 and it sets in rotation too, in order to recover a part of the phase displacement relative to the first rotor 16. As a consequence, the second rotor 22 "pursues" the first rotor 16 so as to balance the torque difference imposed by the stator 12 on the two rotors in the condition of absence of reciprocal phase displacement.

If the case the stator 12 is not powered by electrical current, by the effect of a failure of the same or interruption of the power supply, if the first rotor 16 is placed in rotation, for example by the shaft 20 whereto a driving pulley is connected, it pulls in its rotating motion, by the effect of the magnetic interaction of the magnetic fields generated by the permanent magnets making up the two rotors, also the second rotor 22 whereto for example, the pump impeller is connected to through the shaft 26. In this way, the impeller rotation in the logic of a fail safe operation is ensured.

The motion from the shaft 20 to the first rotor 16 is transmitted by means of a joint 18, which making the contact with said first rotor imposes a rotation to the same corresponding to that of the shaft 20 whereto the pump pulley is connected.

As it can be noticed from the above, the results achieved by the invention are clear.

The magnetic drive electrical rotary motor of the invention can be advantageously coupled with a pump of a cooling circuit allowing, in this way, the elimination of sealing elements with a high risk of wear that impair the useful life of the pump itself.

A further advantage of the motor of the invention is represented by the fact that it allows a fail-safe operation, since it allows the pump to continue performing its function, even if at a reduced speed, also in the event of failure or fault of the stator of the motor itself.

A further advantage is the fact that the electrical motor of the invention is a compact motor and with small overall dimensions.

Even if the invention has been disclosed hereinbefore with particular reference to an embodiment thereof made by way of a non-limiting example only, several changes and variations will appear clear to a man skilled in the art in the light of the above description. The present invention therefore is intended to include any changes and variations thereof falling within the spirit and the scope of the following claims.

## Claims

1. A magnetic drive electrical rotary motor (10) of the brushless type, especially suitable for being used in the automotive field suitable for placing in rotation the impeller of a pump for the circulation of cooling fluids in an internal combustion motor or in a fuel cell, comprising a stator (12), a first rotor or external rotor (16) arranged coaxially and internally to said stator and a second rotor or internal rotor (22) arranged coaxially and internally to the first rotor (16), said motor being **characterised in that** it comprises magnetic means, arranged on the surface of said first and second rotor (16, 22), suitable for ensuring a fail safe operation of the pump or of the device connected to the motor itself.

2. The rotary motor according to claim 1, **characterised in that** the magnetic means arranged on the surface of the first rotor (16) and of the second rotor (22) are composed of one or more external (28) and internal (30) permanent magnets.

3. The motor according to claim 2, **characterised in that** the external permanent magnets (28) and the internal permanent magnets (30) are radially polarised in sectors and with alternating polarities.

4. The motor according to claims 2 and 3, **characterised in that** the external permanent magnets (28) and the internal permanent magnets (30) are made of NdFeB.

5. The motor according to claims 2 and 3, **characterised in that** the external permanent magnets (28) and the internal permanent magnets (30) are made of AlNiCo.

6. The motor according to claims 2 and 3, **characterised in that** the external permanent magnets (28) and the internal permanent magnets (30) are made of SmCo.

7. The motor according to claims 2 to 6, **characterised in that** the external permanent magnets (28) and the permanent magnets (30) are made as a single body.

8. The motor according to claims 2 to 6, **characterised in that** the external permanent magnets (28) and the internal permanent magnets (30) are made as an assembly of two or more elements.

9. The motor according to claim 1, **characterised in that** a partition (32) made of non-magnetic and non-conductor material is arranged between the first rotor (16) and the second rotor (22).

10. The motor according to claim 1, **characterised in that** the partition (32) is made of non-magnetic low electrical conductivity material.

11. The motor according to claim 1, **characterised in that** a further partition is in case arranged between the stator (12) and the first rotor (16).

12. The motor according to claim 1, **characterised in that** the second rotor (22) is fitted on an internal core (24) of ferromagnetic material keyed on a second shaft (26).

13. The motor according to claims 1 to 12, **characterised in that** the first shaft (20) and the second shaft (26) are coaxial.

14. The motor according to claims 1 to 13, **characterised in that** it in case comprises an electromagnetic joint.
